# EUROPÄISCHE PATENTANMELDUNG

(11) **EP 3 226 346 A1**
(43) Veröffentlichungstag der Anmeldung: **04.10.2017**
(21) Anmeldenummer: 17161356.5
(22) Anmeldetag: 16.03.2017
(51) Int. Cl.: H01Q 1/22, G01F 23/284, H01Q 15/10, H01Q 19/06

(54) **FÜHRUNGSELEMENT FÜR EINE ANTENNE UND VERFAHREN ZUR HERSTELLUNG EINES SOLCHEN FÜHRUNGSELEMENTES**

(30) Priorität: 28.03.2016 DE 102016105647
(71) Anmelder: Krohne Messtechnik GmbH, 47058 Duisburg (DE)
(72) Erfinder: Gerding, Michael, 44805 Bochum (DE)
(74) Vertreter: Gesthuysen Patent- und Rechtsanwälte

(57) **Zusammenfassung**

Die Erfindung betrifft ein Führungselement (1) für eine Antenne für ein Füllstandmessgerät, wobei das Führungselement (1) aus einem dielektrischen Material (5) besteht und zur Formung, Führung und Abstrahlung elektromagnetischer Strahlung dient.

Die Aufgabe, ein Führungselement anzugeben, bei dem die aus dem Stand der Technik bekannten Nachteile - zumindest weitestgehend - behoben sind, ist dadurch gelöst, dass das Führungselement (1) zur gezielten Formung der elektromagnetischen Strahlung einen über die räumliche Ausdehnung des Führungselements (1) veränderlichen Permittivitätsverlauf (P) aufweist, der durch eine räumliche Verteilung der Materialdichte des dielektrischen Materials (5) realisiert ist, wobei die Materialdichte durch einen Anteil an dielektrischem Material (5) pro Elementarzelle (8) einer vorgegebenen Größe bestimmt ist..

Des Weiteren betrifft die Erfindung ein Verfahren zur Herstellung eines Führungselementes.

## Beschreibung

Die Erfindung betrifft ein Führungselement für eine Antenne für ein Füllstandmessgerät, wobei das Führungselement aus einem dielektrischen Material besteht und zur Formung, Führung und Abstrahlung elektromagnetischer Strahlung dient. Des Weiteren betrifft die Erfindung ein Verfahren zur Herstellung eines solchen Führungselementes.

Antennen, für die die in Rede stehenden Führungselemente verwendet werden, finden beispielsweise in nach dem Radarprinzip arbeitenden Füllstandmessgeräten Verwendung. Neben dem Führungselement umfasst eine Antenne auch ein Speiseelement. Das Speiseelement emittiert elektromagnetische Strahlung und beaufschlagt das Führungselement mit der elektromagnetischen Strahlung, welches die Strahlung dann formt, führt und abstrahlt.

Das Führungselement selbst, das beispielsweise eine Linse sein kann, ist aus einem dielektrischen Material hergestellt. Gerade für die Fertigung von Linsen bietet sich die Verwendung von einem Kunststoff, beispielsweise PEEK (Polyetheretherketon), an. Die dielektrische Eigenschaft des verwendeten Materials wird charakterisiert durch seine dielektrische Leitfähigkeit, die auch als Dielektrizität oder Permittivität bezeichnet wird.

Üblicherweise weisen die für das Führungselement verwendeten Materialien eine homogene Verteilung ihrer dielektrischen Eigenschaften auf, beispielsweise indem das Material einfach homogen eingesetzt wird. Dadurch ergibt sich der Vorteil der leichten Produzierbarkeit und Reproduzierbarkeit in der Fertigung. Die Formung der in das Führungselement eingespeisten, dann in dem Führungselement geführten und aus dem Führungselement in den Freiraum abgestrahlten elektromagnetischen Wellen geschieht dann im Wesentlichen im Abstrahlungsbereich des Führungselements, also im Übergangsbereich zwischen dem dielektrischen Material des Führungselements und dem Freiraum. Dieser Übergangsbereich stellt gleichzeitig einen sprunghaften Wechsel der Permittivität dar und bewirkt eine sprunghafte Brechung der elektromagnetischen Wellen. Dieser Effekt kann durch gezielte geometrische Ausgestaltung des Abstrahlbereichs dazu verwendet werden, um ebene Wellenfronten zu formen (siehe z. B. EP 2105991 A1 oder DE 102008008715 A1).

In einigen Fällen ist es jedoch notwendig, unterschiedliche Schichtungen von dielektrischen Eigenschaften zu realisieren, beispielsweise um in Summe eine größere Brechung zu bewirken, als sie mit nur einer einzigen Grenzschicht bewirkt werden kann. Das passiert in der Regel durch ein schichtweises Aufbringen unterschiedlicher dielektrischer Materialien, was voraussetzt, dass eine entsprechende Materialverfügbarkeit gegeben ist. Des Weiteren lassen sich nicht beliebige Materialien miteinander verbinden, vielmehr müssen beim Zusammenfügen verschiedener Materialien die mechanischen, thermischen und chemischen Eigenschaften der Materialien berücksichtigt werden.

Eine derartige Herstellung kann demnach umständlich und aufwendig sein, da sie aus vielen Arbeitsschritten und einer Materialauswahl besteht, die genau aufeinander abgestimmt sein müssen.

Ferner ergibt sich bei der Verwendung von Schichtungen der Nachteil, dass nicht beliebig geformte Bereiche des Führungselements und insbesondere im Inneren des Führungselements lokalisierte Bereiche eine andere Permittivität aufweisen können.

Der Erfindung liegt demnach die Aufgabe zugrunde, ein Führungselement anzugeben, bei dem die aus dem Stand der Technik bekannten Nachteile - zumindest weitestgehend - behoben sind. Des Weiteren ist es die Aufgabe der Erfindung, ein Verfahren zur Herstellung eines Führungselementes anzugeben.

Die Aufgabe ist bei dem erfindungsgemäßen Führungselement zunächst und im Wesentlichen dadurch gelöst, dass das Führungselement zur gezielten Formung der elektromagnetischen Strahlung einen über die räumliche Ausdehnung des Führungselements veränderlichen Permittivitätsverlauf aufweist, der durch eine räumliche Verteilung der Materialdichte des dielektrischen Materials realisiert ist, wobei die Materialdichte durch einen Anteil an dielektrischem Material pro Elementarzelle einer vorgegebenen Größe bestimmt ist..

Das erfindungsgemäße Führungselement weist also zunächst den Vorteil auf, dass es aus nur einem Material gefertigt ist. Zur Variation der Permittivität wird erfindungsgemäß nicht auf ein anderes Material zurückgegriffen, sondern die Materialdichte des einen dielektrischen Materials verändert. Es entfallen also sämtliche Nachteile, die durch das Aufeinanderbringen zweier verschiedener Materialien entstehen können. Es müssen also weder thermische noch chemische oder mechanische Eigenschaften des verwendeten Materials besonders berücksichtigt werden, da kein zweites Material mit abweichenden Eigenschaften verwendet wird.

Darüber hinaus weist das erfindungsgemäße Führungselement den Vorteil auf, dass die Materialdichte des dielektrischen Materials über die gesamte räumliche Ausdehnung des Führungselements verändert sein kann. So kann die Materialdichte in einem Bereich im Inneren des Führungselements anders sein, als in einem angrenzenden Bereich oder in einem Bereich, der an der Außenseite/Oberfläche des Führungselements liegt. Die Formung elektromagnetischer Wellen kann bei erfindungsgemäßen Führungselementen also zu einem Teil bereits vollkommen zwanglos in dem Führungselement vollzogen werden und nicht erst an der Außengrenze des Führungselements. Wird die Materialdichte des dielektrischen Materials kontinuierlich verändert, kann die Phasenfront der geführten elektromagnetischen Welle praktisch kontinuierlich geformt werden, sie wird nicht an harten Grenzen gebrochen, sondern an quasikontinuierlichen Übergängen in die Wunschform gebogen.

Die Materialdichte ist erfindungsgemäß bestimmt durch einen Anteil an Material pro Elementarzelle einer vorgegebenen Größe.

Der Anteil an Material ist hier definiert durch den Volumenanteil an Material in dem Volumen der Elementarzelle und ist über die gesamte Elementarzelle gemittelt. Eine Elementarzelle ist hier zunächst ein gedachter Volumenbereich des Führungselements, in dem eine Permittivität realisiert ist. Der veränderliche Permittivitätsverlauf wird durch eine Mehrzahl nebeneinander angeordneter Elementarzellen unterschiedlicher Permittivitäten realisiert. Eine Elementarzelle muss also nicht übereinstimmen mit einer realisierten materiellen Struktur.

Durch die Elementarzellen wird der Führungskörper oder ein Teil des Führungskörpers also in Bereiche - im Mittel - gleicher Permittivitäten unterteilt. Werden gleiche Elementarzellen verwendet, bilden sie eine regelmäßige Raumfüllung des vom Führungselement beanspruchten Volumens.

Das Führungselement, oder zumindest Teile des Führungselements, wird bzw. werden in eine Mehrzahl von Elementarzellen eingeteilt. Die Elementarzellen müssen hierbei nicht alle die gleiche Größe aufweisen. Es ist ebenfalls denkbar - und in manchen Situationen sogar vorteilhaft -, dass Elementarzellen verschiedener Größen nebeneinander angeordnet sind oder die Größe der Elementarzelle je nach Materialdichte und/oder Anordnung des Materials in der Elementarzelle variiert. Dies ist Gegenstand von bevorzugten Ausführungsbeispielen.

Das Material kann in einer Elementarzelle unterschiedlich angeordnet sein, wobei die Anordnung des Materials von Elementarzelle zu Elementarzelle variieren kann. Im Folgenden soll die Anordnung des Materials in einer einzigen Elementarzelle betrachtet werden.

Eine Ausgestaltung des erfindungsgemäßen Führungselements ist dadurch charakterisiert, dass das Material zumindest in einem Teil der Elementarzellen in einer unregelmäßigen Struktur angeordnet ist. Wenn die Rede von einer unregelmäßigen Struktur ist, dann bedeutet das, dass die Struktur keine Periodizität aufweist und keine Ordnung in der Struktur zu finden ist. Ein Beispiel für eine unregelmäßige Struktur ist eine schwammartige oder poröse Struktur. Das Material in der Elementarzelle kann also beispielsweise eine vorgegebene Porosität aufweisen. Das Material kann hierbei eine offene Porosität aufweisen, also Hohlräume, die miteinander in Verbindung stehen. Das Material kann aber auch eine geschlossene Porosität aufweisen, also Hohlräume, die nicht miteinander in Verbindung stehen. Die Hohlräume sind statistisch bzw. zufällig in dem Material verteilt, sodass eine unregelmäßige Struktur vorliegt.

In einer Ausgestaltung des erfindungsgemäßen Führungselements ist vorgesehen, dass das Material zumindest in einem Teil der Elementarzellen in einer regelmäßigen Struktur angeordnet ist. Eine regelmäßige Struktur kann beispielsweise durch die Aneinanderreihung von Polyedern realisiert werden, also beispielsweise durch eine Aneinanderreihung von Würfeln oder durch eine Aneinanderreihung von Pyramiden oder Prismen. Denkbar ist ein jedes Polyeder, das sich lückenlos aneinanderreihen lässt und damit eine vollständige Raumfüllung realisiert. Natürlich können auch mehrere verschiedenartige Raumkörper verwendet werden, die miteinander eine vollständige räumliche Parkettierung bilden. Die Materialdichte kann hierbei zum einen durch die Wahl des Polyeders, zum anderen bei getroffener Wahl des Polyeders durch die Wandstärke und/oder die Größe des Polyeders variiert werden.

Es ist zu beachten, dass das Polyeder von innen hohl ist. Eine weitere Realisierung einer geordneten Struktur kann dadurch entstehen, dass eine zweidimensionale Grundstruktur zugrunde gelegt wird, die dann in die dritte Raumrichtung "hochgezogen" wird, also beispielsweise eine Honigwabenstruktur, die zu hohlen Säulen hochgezogen wird. Als zweidimensionale Grundstrukturen bieten sich beispielsweise alle schiefwinkligen, rechtwinkligen, hexagonalen oder quadratischen Grundstrukturen an.

Bei der Wahl der Strukturen und der Größe der Strukturen, sowohl der unregelmäßigen als auch der regelmäßigen, ist bevorzugt darauf zu achten, dass die Strukturen keine räumliche Periodizitäten aufweisen, die die Strahlung beeinflussen, derart, dass beispielsweise Interferenzeffekte auftreten. Eine Formung der Strahlung soll nur durch die variierte Materialdichte und damit die variierte effektive Permittivität erfolgen.

Elementarzellen, in denen das Material regelmäßig angeordnet ist, können sich neben Elementarzellen befinden, in denen das Material eine unregelmäßige Struktur aufweist.

Für die nächsten Eigenschaften soll nicht mehr eine Elementarzelle als solche, sondern das gesamte Führungselement betrachtet werden.

Eine bevorzugte Ausgestaltung des erfindungsgemäßen Führungselementes ist dadurch gekennzeichnet, dass der Permittivitätsverlauf zumindest über einen Teil der räumlichen Ausdehnung des Führungselements stetig ist. Die Permittivität kann beispielsweise über den Teil der räumlichen Ausdehnung linear ansteigen oder linear abfallen. Ebenfalls denkbar ist ein exponentieller Anstieg oder Abfall der Permittivität über einen Teil der räumlichen Ausdehnung. Erfindungsgemäß lassen sich so Gradienten der Permittivität realisieren. Das kann beispielsweise durch einen Porositätsverlauf des Materials realisiert werden. Der Permittivitätsverlauf kann jeder beliebigen stetigen Funktion gehorchen. Das erfindungsgemäße Führungselement hat also den Vorteil, dass sich beliebige Permittivitätsverläufe realisieren lassen.

Eine weitere Ausgestaltung des erfindungsgemäßen Führungselementes ist dadurch gekennzeichnet, dass der Permittivitätsverlauf zumindest über einen Teil der räumlichen Ausdehnung des Führungselements unstetig ist. So lassen sich beispielsweise Abstufungen und abrupte Übergänge der Permittivität realisieren, ohne dass das verwendete Material variiert werden müsste.

Über das gesamte Führungselement gesehen ist eine Kombination aus stetigen und unstetigen Bereichen der Permittivität ohne Weiteres möglich.

Bei einer vorteilhaften Ausgestaltung des Führungselements ist vorgesehen, dass die unregelmäßige Struktur oder die regelmäßige Struktur eine Voronoi-Parkettierung oder eine Delaunay-Parkettierung des Raumes der Elementarzellen ist. Die angesprochenen Parkettierungen sind an sich bekannt und erlauben eine Einteilung eines n-dimensionalen - und damit auch dreidimensionalen - Raumes auf Grundlage einer vorgegebenen Punkteverteilung. Im Falle der Voronoi-Zerlegung ist jeder Punkt das Zentrum einer ihn umgebenden Voronoi-Zelle. Zu jedem Voronoi-Diagramm existiert ein duales Delaunay-Diagramm, das sich ebenfalls zur vorteilhaften Zerlegung des Raumes eignet, also des durch eine Elementarzelle oder auch mehrere Elementarzellen definierten Raumes.

Die Voronoi-Zelle eines betrachteten, vorgegebenen Zentralpunktes umfasst all diejenigen Punkte des gesamten Raumes, die näher zu dem betrachteten, vorgegebenen Zentralpunkt sind als zu jedem anderen vorgegebene Zentralpunkt. Durch dieses Bildegesetz entsteht eine sehr kompakte Raumzerlegung. Vorteilhafterweise wird die Voronoi-Zerlegung einer Elementarzelle durch Vorgabe einer statistisch zufälligen Punkteverteilung vorgenommen. Dadurch ist gewährleistet, dass die Wandungen der entstehenden Voronoi-Zellen ebenfalls statistisch zufällig orientiert sind. Zur Erzielung der gewünschten Permittivität kann dann beispielsweise die Dichte der vorgegebenen Zentralpunkte entsprechend dem zu erzielenden Permittivitätswert geändert werden. Ein hoher Permittivitätswert wird also realisiert durch eine hohe Voronoi-Zellendichte innerhalb einer Elementarzelle. Bei diesem Konzept kann mit gleichbleibenden Wandstärken gearbeitet werden. Bei einem alternativen Konzept bleibt die mittlere Punktedichte der Voronoi-Zentren im Wesentlichen konstant, jedoch wird die Wandstärke entsprechend dem zu erzielenden Permittivitätwert geändert.

Eine vorteilhafte Ausgestaltung der Erfindung besteht also darin, dass die räumliche Verteilung der Materialdichte des dielektrischen Materials durch Variation der Wandstärke der Zellen realisiert ist, aus denen die Voronoi-Parkettierung oder die Delaunay-Parkettierung der Elementarzellen besteht.

Eine alternative vorteilhafte Ausgestaltung sieht vor, dass die räumliche Verteilung der Materialdichte des dielektrischen Materials durch Variation der Dichte der Zellen realisiert ist, aus denen die Voronoi-Parkettierung oder die Delaunay-Parkettierung der Elementarzellen besteht bei im Wesentlichen gleichbleibender Wandstärke der Zellen. Beide vorstehend beschriebenen Varianten können auch kombiniert werden.

Gemäß einer bevorzugten Ausgestaltung des Führungselements ist vorgesehen, dass die Größe der Elementarzelle in einem Volumenbereich des Führungselements abhängig ist von dem Gradienten des Permittivitätsverlaufs in diesem Volumenbereich. Dieses Gestaltungsprinzip folgt der Erkenntnis, dass schnellen räumlichen Änderungen der Permittivität konstruktiv anders begegnet werden muss als langsamen räumlichen Änderungen der Permittivität. Daran anknüpfend ist insbesondere erkannt worden, dass es sinnvoll ist, nicht irgendeinen Gradienten des Permittivitätsverlaufs in einem Volumenbereich des Führungselementes zu betrachten, sondern den maximalen Gradienten des Permittivitätsverlaufs in diesem Volumenbereich. Dazu wird ein räumliches Koordinatensystem zugrunde gelegt, beispielsweise ein orthogonales oder ein hexagonales Koordinatensystem, und der Gradient des Permittivitätsverlaufs wird in jeder Raumesrichtung bestimmt. Der maximale Gradient in diesem Volumenelement bzw. in der Elementarzelle des Führungselementes bestimmt die Größe der Elementarzelle. Nach welchen Prinzipien dies geschehen kann, wird nachfolgend dargestellt.

Gemäß einer besonders vorteilhaften Ausgestaltung des Führungselementes ist vorgesehen, dass die Größe der Elementarzelle am kleinsten für den Volumenbereich gewählt ist, der den größten (maximalen) Gradienten des Permittivitätsverlaufs aufweist und/oder dass die Größe der Elementarzelle am größten für den Volumenbereich gewählt ist, der den kleinsten (minimalen) Gradienten des Permittivitätsverlaufs aufweist. Damit wird eine schnelle räumliche Permittivitätsänderung durch einen schnellen Wechsel an Elementarzellen realisiert, sodass der Übergang zwischen Bereichen stark veränderlicher Permittivität gleichwohl quasikontinuierlich realisiert ist.

Nach einer weiteren vorteilhaften Ausgestaltung ist das Führungselement dadurch gekennzeichnet, dass die Größe einer Elementarzelle im statistischen Mittel über das Volumen des Führungselements gemittelt dort größer ist, wo der Gradient des Permittivitätsverlaufs kleiner ist und die Größe einer Elementarzelle im statistischen Mittel über das Volumen des Führungselements gemittelt dort kleiner ist, wo der Gradient des Permittivitätsverlaufs größer ist. Dies ist bei einer ganz besonders vorteilhaften Ausgestaltung des Führungselements so realisiert, dass der maximale räumliche Permittivitätsgradient in eine proportionale räumliche Punktedichte übersetzt wird und die Punkte als Entwicklungspunkte für eine dreidimensionale Voronoi-Zerlegung des Volumens des Führungselementes dienen.

Bevorzugt ist das Führungselement durch ein generatives Fertigungsverfahren hergestellt. Bei den generativen Fertigungsverfahren, die umgangssprachlich auch als 3D-Druck-Verfahren bezeichnet werden, wird das herzustellende Objekt schichtenförmig hergestellt. Für das erfindungsgemäße Führungselement eignet sich die Herstellung durch ein generatives Fertigungsverfahren, da so auf einfache Weise eine Materialdichteverteilung realisiert werden kann, auch insbesondere im Inneren des Führungselementes.

Die Erfindung betrifft ebenfalls ein Verfahren zur Herstellung eines Führungselementes für eine Antenne für ein Füllstandmessgerät.

Das erfindungsgemäße Verfahren ist dadurch gekennzeichnet, dass zunächst eine Permittivitätsverteilung in der räumlichen Ausdehnung des Führungselements vorgegeben wird, dass dann eine zu der vorgegebenen Permittivitätsverteilung korrespondierende Materialdichteverteilung bestimmt wird, dass dann eine Struktur bestimmt wird, die die Materialdichteverteilung umsetzt und dass dann die Struktur durch ein generatives Fertigungsverfahren hergestellt wird.

Durch das erfindungsgemäße Verfahren lassen sich die erfindungsgemäßen Führungselemente auf besonders effektive Weise herstellen. In einem ersten Verfahrensschritt wird die Permittivitätsverteilung in der räumlichen Ausdehnung des Führungselementes vorgegeben. Diese kann beispielsweise einen stetigen Verlauf aufweisen, oder einen unstetigen Verlauf aufweisen, also beispielsweise abrupte Sprünge in der Permittivität. Da die Permittivität von der Materialdichte abhängig ist, wird in dem zweiten Schritt eine zu dem Permittivitätsverlauf korrespondierende Materialdichteverteilung bestimmt. Diese Materialdichteverteilung wird durch verschiedene Strukturen umgesetzt, beispielsweise durch verschiedene Porositäten in dem Material. Nach der Bestimmung der die Materialdichteverteilung umsetzenden Struktur wird die Struktur und damit das Führungselement durch ein generatives Fertigungsverfahren hergestellt.

Bei der Wahl des generativen Fertigungsverfahrens muss auf die vorher bestimmte Struktur geachtet werden. So eignen sich nicht alle generativen Fertigungsverfahren für alle Strukturen. Ebenfalls wichtig ist die Wahl des Materials des Führungselementes, da auch nicht jedes generative Fertigungsverfahren für jedes Material geeignet ist. Den generativen Fertigungsverfahren ist gemein, dass das zu fertigende Objekt, also vorliegend das Führungselement schichtweise hergestellt wird. Das dreidimensionale Objekt wird in zweidimensionale Schichten unterteilt, die dann aufeinander aufgebracht werden. Bei der Wahl der Strukturen ist darauf zu achten, dass durch die Struktur als solche keine Beeinflussungen der Ausbreitung der Strahlung entstehen, weder durch die Struktur selbst noch durch übergeordnete Strukturen in der Struktur. Eine Beeinflussung der elektromagnetischen Strahlung soll nur aufgrund der variierenden Materialdichte und damit der variierenden Permittivität erfolgen. Beispielsweise bietet es sich an, eine Struktur schichtweise um einen kleinen Winkel zu rotieren, also verdreht zueinander aufzubringen.

Eine bevorzugte Ausführungsform des erfindungsgemäßen Verfahrens ist dadurch gekennzeichnet, dass für die Bestimmung der die Materialdichteverteilung umsetzenden Struktur das Führungselement in Elementarzellen eingeteilt wird. Die Größe benachbarter Elementarzellen kann hierbei voneinander variieren. Die Wahl der Größe der Elementarzellen kann hierbei auf verschiedene Art erfolgen. Eine besonders bevorzugte Ausführungsform des erfindungsgemäßen Verfahrens sieht vor, dass die Größe der Elementarzelle in einem Volumenbereich abhängig von dem Gradienten des Permittivitätsverlaufs in diesem Volumenbereich gewählt wird, insbesondere von dem maximalen Gradienten des Permittivitätsverlaufs in diesem Volumenbereich.

Bei dem erfindungsgemäßen Verfahren ist hierbei in einer besonders bevorzugten Ausführungsform vorgesehen, dass die Größe der Elementarzelle am kleinsten für den Volumenbereich gewählt wird, der den größten Gradienten des Permittivitätsverlaufs aufweist und/oder dass die Größe der Elementarzelle am größten für den Volumenbereich gewählt wird, der den kleinsten Gradienten des Permittivitätsverlaufs aufweist.

Des Weiteren ist eine bevorzugte Ausführungsform des erfindungsgemäßen Verfahrens dadurch gekennzeichnet, dass die Größe einer Elementarzelle im statistischen Mittel über das Volumen des Führungselements gemittelt dort größer gewählt wird, wo der Gradient des Permittivitätsverlaufs kleiner ist und die Größe einer Elementarzelle im statistischen Mittel über das Volumen des Führungselements gemittelt dort kleiner gewählt wird, wo der Gradient des Permittivitätsverlaufs größer ist. Hierbei wird bevorzugt so vorgegangen, dass die Größe der Elementarzellen derart gewählt wird, dass der maximale räumliche Permittivitätsgradient in eine proportionale räumliche Punktedichte übersetzt wird und die Punkte als Entwicklungspunkte für eine dreidimensionale Voronoi-Zerlegung des Volumens des Führungselementes dienen.

Die Vorteile der bevorzugten Ausführungsformen des erfindungsgemäßen Verfahrens, die sich auf die Wahl der Größe der Elementarzellen beziehen, sind schon bei dem Führungselement selbst aufgezeigt worden und gelten entsprechend.

Im Einzelnen gibt es nun verschiedene Möglichkeiten, das erfindungsgemäße Führungselement und das erfindungsgemäße Verfahren zur Herstellung eines Führungselementes auszugestalten und weiterzubilden. Hierzu wird verwiesen auf die den Patentansprüchen 1 und 8 nachgeordneten Patentansprüche sowie die Beschreibung bevorzugter Ausführungsbeispiele in Verbindung mit der Zeichnung. In der Zeichnung zeigen
- Fig. 1: ein erfindungsgemäßes Führungselement in Form einer ellipsenförmigen Linse
- Fig. 2a: ein erstes Beispiel einer Elementarzelle, in der das Material in einer unregelmäßigen Struktur angeordnet ist,
- Fig. 2b: ein zweites Beispiel einer Elementarzelle, in der das Material in einer unregelmäßigen Struktur angeordnet ist,
- Fig. 2c: ein erstes Beispiel einer Elementarzelle, in der das Material in einer regelmäßigen Struktur angeordnet ist,
- Fig. 2d: ein zweites Beispiel einer Elementarzelle, in der das Material in einer regelmäßigen Struktur angeordnet ist,
- Fig. 2e: ein drittes Beispiel einer Elementarzelle, in der das Material in einer regelmäßigen Struktur angeordnet ist,
- Fig. 3: einen Querschnitt durch eine Linse zur Demonstration eines stetigen Permittivitätsverlaufs in Teilbereichen der Linse,
- Fig. 4: ein Flussdiagramm des erfindungsgemäßen Verfahrens,
- Fig. 5a, b: ein Ausführungsbeispiel mit variierender Elementarzellengröße in Abhängigkeit von dem Gradienten des Permittivitätsverlaufs und
- Fig. 6a, b: ein Ausführungsbeispiel mit Strukturzellen, die im statistischen Mittel in großen Elementarzellen größer sind als in kleineren Elementarzellen..

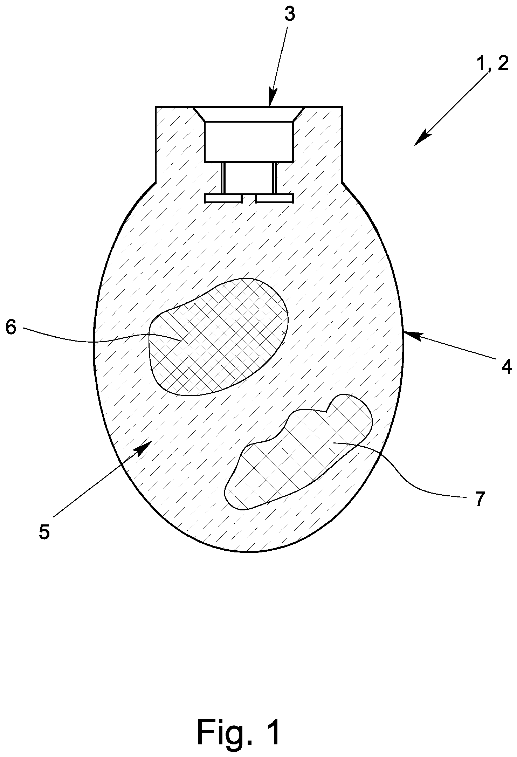

In Fig. 1 ist ein erfindungsgemäßes Führungselement 1 in Form einer ellipsenförmigen Linse 2 einer Antenne dargestellt. Die Linse 2 wird durch ein Speiseelement 3 mit elektromagnetischer Strahlung beaufschlagt und über die Linsenoberfläche 4 abgestrahlt. Die Linse 2 ist aus einem dielektrischen Material 5 hergestellt. In der Linse 2 befinden sich Bereiche 6, 7, in denen die Materialdichte von der Materialdichte des Restes der Linse 2 abweicht. Die Linse 2 weist also über ihre räumliche Ausdehnung eine räumliche Verteilung der Materialdichte auf. Die Permittivität des dielektrischen Materials ist abhängig von der Materialdichte, so dass die Linse über ihre räumliche Ausdehnung einen veränderlichen Permittivitätsverlauf aufweist. Die Materialdichte ist bestimmt durch den Anteil an Material 5 pro Elementarzelle 8 einer vorgegebenen Größe.

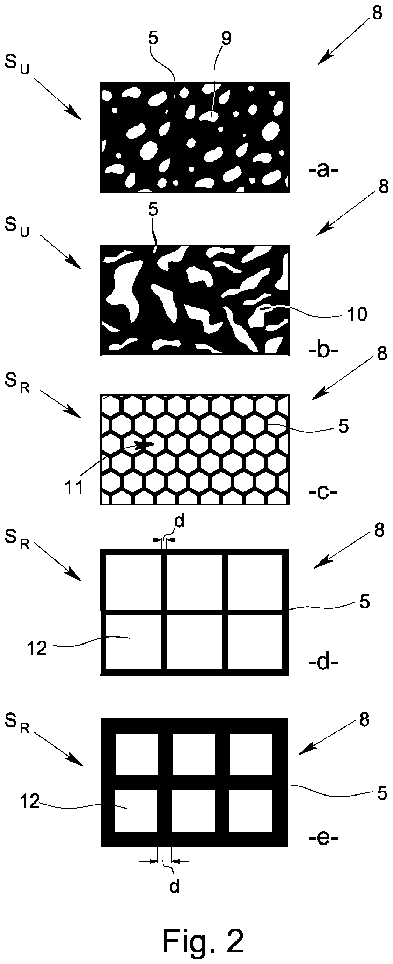

Das Material kann in den Elementarzellen unterschiedlich angeordnet sein. In den Fig. 2a bis Fig. 2e sind Querschnitte durch Elementarzellen, die einen rechteckigen Querschnitt aufweisen, dargestellt. Der Querschnitt der Elementarzelle muss nicht rechteckig gewählt werden, vielmehr ist die Wahl der Form der Elementarzelle beliebig.

Fig. 2a zeigt ein erstes Beispiel einer Elementarzelle 8, bei der das Material 5 in einer ungeordneten Struktur angeordnet ist. Das Material 5 weist hierbei eine geschlossene Porosität auf, weist also Hohlräume 9 auf, die nicht miteinander verbunden sind. Die Hohlräume 9 haben unterschiedliche Größen und sind zufällig im Material 5 verteilt angeordnet.

Fig. 2b zeigt ein weiteres Beispiel einer Elementarzelle 8, bei der das Material 5 in einer ungeordneten Struktur angeordnet ist. Hier sind in dem Material 5 wurmartige Hohlräume 10 realisiert. Die Hohlräume 10 sind ebenfalls zufällig in dem Material 5 angeordnet, so dass durch die Hohlräume 10 keine übergeordnete geordnete Struktur entsteht.

Als ein erstes Beispiel für eine Anordnung des Materials 5 in einer geordneten Struktur ist in Fig. 2c das Material 5 in Form von Honigwaben 11 angeordnet. Bei einer geordneten Struktur muss darauf geachtet werden, dass die Strukturen in einer Größe realisiert sind, die nicht zu einer ungewollten strukturell bedingten Beeinflussung der elektromagnetischen Strahlung führen.

Fig. 2d und 2e zeigen den Querschnitt einer Elementarzelle 8, bei der das Material 5 in Form von aneinandergereihten Würfeln 12 angeordnet ist und so eine geordnete Struktur aufweist. Die Materialdichte lässt sich beispielsweise durch die Dicke d der Würfelwände beeinflussen. So ist die gewählte Struktur in den Elementarzellen in Fig. 2d und 2e die gleiche, jedoch weist die Elementarzelle in Fig. 2e eine höhere Materialdichte auf, als die Elementarzelle in Fig. 2d.

Die dargestellten Strukturen lassen sich besonders geeignet durch ein generatives Fertigungsverfahren realisieren. Die Wahl des Fertigungsverfahrens ist hierbei abhängig von der Wahl des Materials und der gewählten Struktur.

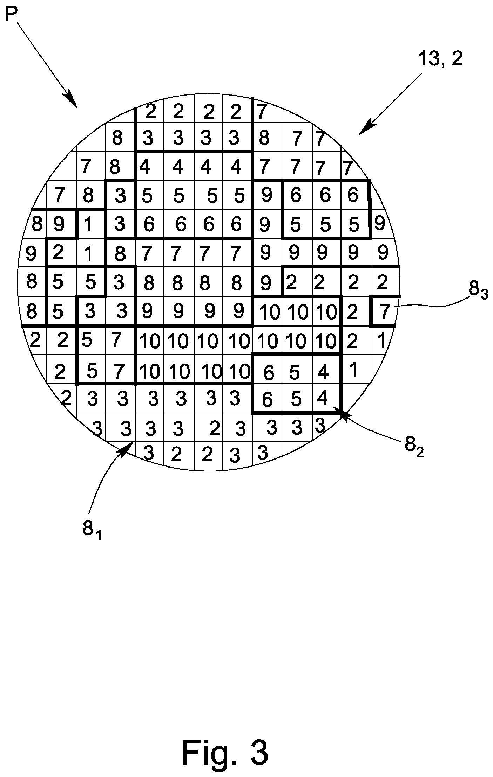

In Fig. 3 ist ein Querschnitt 13 einer Linse 2 dargestellt. Die Darstellung ist nur schematisch und soll zur Veranschaulichung des Permittivitätsverlaufes P in der Linse dienen. Dazu ist die Linse über den Querschnitt in Kästchen eingeteilt. Die Zahlen in den Kästchen stehen für einen Permittivitätswert, wobei die Zahl 10 die höchstmögliche Permittivität darstellt und die Zahl 1 die geringstmögliche Permittivität darstellt. In der unteren Mitte weist die Linse 2 einen Bereich höchstmöglicher Permittivität auf, die Kästchen sind mit der 10 gekennzeichnet. Die Permittivität fällt zum in der Figur oberen Rand der Linse 2 ab. Hierbei verzeichnet die Permittivität in diesem Bereich einen linearen Verlauf von der unteren Mitte aus bis zu dem oberen Rand der Linse. Diese Verteilung der Permittivität ist ein Beispiel für einen kontinuierlichen, stetigen Permittivitätsverlauf in Teilen der räumlichen Ausdehnung der Linse 2.

Ebenfalls dargestellt sind Bereiche, die durch Sprünge in der Permittivität gekennzeichnet sind. Die Permittivität in dem in der Figur dargestellten rechten unteren Bereich der Linse 2 fällt von einem Permittivitätswert von 10 direkt auf einen Wert von 2 ab. Dargestellt ist der Verlauf nur beispielhaft in einem zweidimensionalen Querschnitt. Über die gesamte Linse gesehen kann der Permittivitätsverlauf P jeden beliebigen Verlauf annehmen.

Weiter dargestellt sind in der Fig. 3 einige Elementarzellen 8. Die Elementarzellen 8 sind dick umrandet dargestellt. Zu sehen ist, dass die Elementarzellen 8 unterschiedliche Größen aufweisen. Die Größe der jeweiligen Elementarzelle 8 ist hierbei in Abhängigkeit von dem Gradienten des Permittivitätsverlaufs P gewählt.

Die Elementarzelle 8₁ ist die größte dargestellte Elementarzelle. Innerhalb der Elementarzelle 8₁ variiert die Permittivität zwischen 3 und 2, der Gradient ist damit sehr klein, sodass eine große Elementarzelle gewählt werden kann. Die Elementarzelle 8₂ weist eine kleinere Größe auf. Innerhalb der Elementarzelle 8₂ variiert die Permittivität zwischen 6 und 4, sodass der Gradient innerhalb der Elementarzelle 8₂ auch gering ist. Jedoch ist diese Elementarzelle 8₂ beispielsweise an ihrer oberen Seite von Bereichen einer Permittivität von 10 umgeben. Hier besteht also ein großer Gradient, sodass der Bereich der Permittivität 10 nicht mit in die Einheitszelle 8₂ eingefasst wird. Die Elementarzelle 8₃ am rechten Rand der Linse 2 weist eine Permittivität von 7 auf. In der Umgebung ist die Permittivität jedoch mit Werten von 1 und 2 sehr viel kleiner, sodass ein großer Gradient existiert. Die Größe der Elementarzelle 8₃ ist demnach sehr klein gewählt.

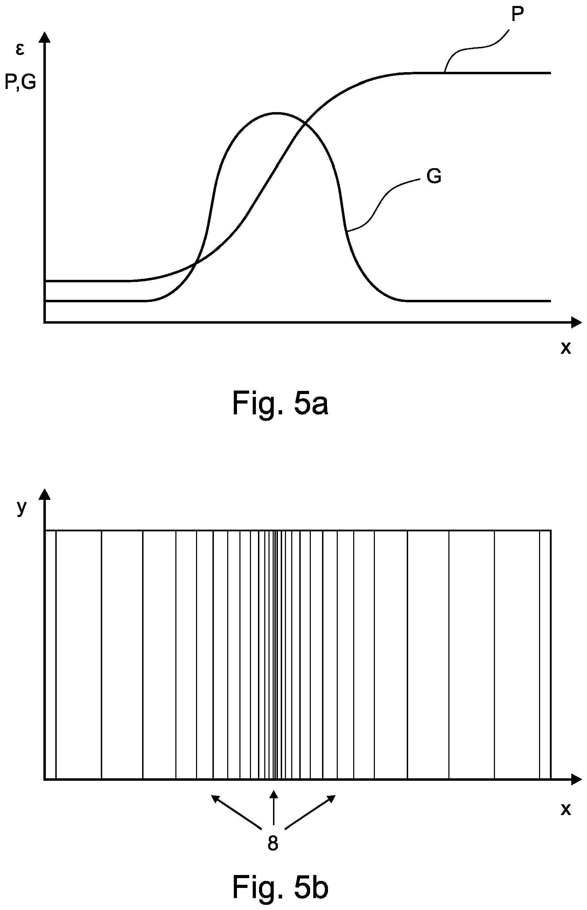

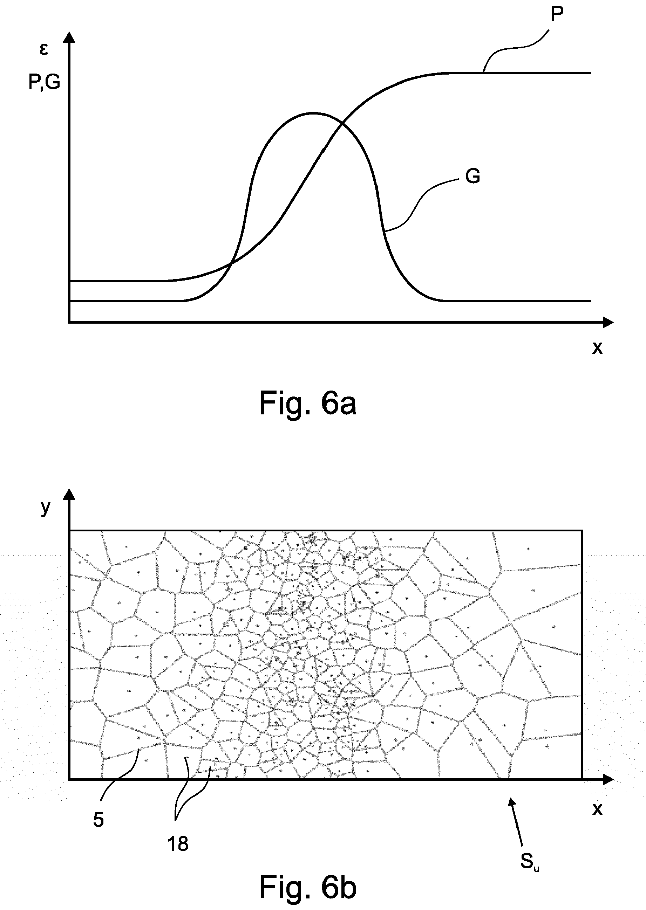

Die Fig. 5a und 6a zeigen einen identischen Permittivitätsverlauf P in einem nicht näher dargestellten Führungselement in Abhängigkeit von lediglich einer Ortskoordinate x. Die Permittivität verläuft zunächst auf einem niedrigen Plateau für kleine x-Werte, steigt dann in einem mittleren Bereich steil an und erreicht für große x-Werte ein Plateau auf einem hohen Permittivitätswert. Dargestellt ist auch qualitativ der zu dem Permittivitätsverlauf P gehörende Verlauf des Gradienten G des Permittivitätsverlaufs P.

Das in den Fig. 5 und 6 dargestellte Ausführungsbeispiel dient der Erläuterung des Bildeprinzips für eine implementierte unregelmäßige Struktur S_{U} innerhalb von Elementarzellen 8 unterschiedlicher Größe.

In Fig. 5b ist zu erkennen, dass die Größe der Elementarzellen 8 in einem Volumenbereich, von dem hier nur die flächige Erstreckung über die x- und y-Achse gezeigt ist, abhängig ist von dem Gradienten G des Permittivitätsverlaufs P in diesem Volumenbereich. Der Gradient G ist zum besseren verständnis ebenfalls in den Fig. 5a und 6a dem Prinzip nach skizziert, es handelt sich nicht um mathematisch exakte Kurven.

Fig. 5b zeigt, dass die Größe der Elementarzellen 8 am kleinsten für den Volumenbereich gewählt ist, der den größten Gradienten G des Permittivitätsverlaufs P aufweist (mittlere x-Werte) und dass die Größe der Elementarzellen 8 am größten für den Volumenbereich gewählt ist, der den kleinsten Gradienten des Permittivitätsverlaufs P aufweist (kleine und große x-Werte). So wird sinnvoll dafür gesorgt, dass große örtliche Veränderungen des Permittivitätsverlaufs feinstufig im Führungselement aufgegriffen und realisiert werden.

Fig. 6b zeigt die struktuelle Realisierung der dem Permittivitätsverlauf entsprechenden räumlichen Verteilung der Materialdichte, indem eine unregelmäßige Struktur S_{U} durch eine räumliche Voronoi-Parkettierung der Elementarzellen 8 realisiert ist. Hier wird die räumliche Verteilung der Materialdichte des dielektrischen Materials 5 durch Variation der Dichte der Strukturzellen 18 realisiert, aus denen die Voronoi-Parkettierung der Elementarzellen 8 besteht bei gleichbleibender Wandstärke der Strukturzellen.Die Koordinaten der durch Punkte dargestellten Zentren der Voronoi-Zellen lassen sich durch einen numerischen Zufallsprozess vorgeben. Es können so auch entsprechende vorgegebene Dichteverteilungen stochastischer Punktwolken erzeugt werden.

Im vorliegenden Fall wird die unregelmäßige Struktur S_{U} durch benachbarte Strukturzellen 18 gebildet, bei denen es sich um Voronoi-Zellen handelt. Die Größe der Strukturzellen 18 verändert sich in Abhängigkeit von der Größe der Elementarzellen 8, in denen sich die jeweiligen Strukturzellen 18 befinden. Die Strukturzellen 18 sind hier im statistischen Mittel in großen Elementarzellen 8 größer als die Strukturzellen 18 in kleineren Elementarzellen 8.

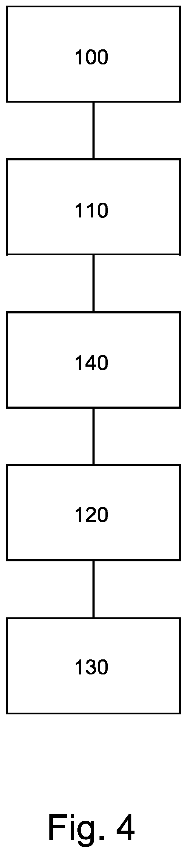

In Fig. 4 ist ein Flussdiagramm eines erfindungsgemäßen Verfahrens dargestellt, mit dem das erfindungsgemäße Führungselement 1 hergestellt werden kann. In einem ersten Schritt 100 wird eine Permittivitätsverteilung in der räumlichen Ausdehnung des Führungselementes vorgegeben. Die Permittivitätsverteilung wird hier auf die Verwendung des Führungselementes abgestimmt.

In einem weiteren Schritt 110 wird dann eine zu der vorgegebenen Permittivitätsverteilung korrespondierende Materialdichteverteilung bestimmt. Um die Materialdichteverteilung realisieren zu können, wird anschließend in einem weiteren Schritt 120 eine Struktur bestimmt, die die Materialdichteverteilung umsetzt.

Für die Bestimmung der Struktur wird zuvor das Führungselement 1 in Elementarzellen 8 eingeteilt.

In dem letzten Schritt 130 wird dann die Struktur durch ein generatives Fertigungsverfahren hergestellt. Bevorzugt ist bei der Bestimmung der Struktur darauf zu achten, dass keine übergeordneten Strukturen entstehen, durch die die elektromagnetische Strahlung ungewollt beeinflusst wird, da eine Formung der Strahlung nur durch die variierte Materialdichte und damit die variierte effektive Permittivität erfolgen soll.

### Bezugszeichen

- 1: Führungselement
- 2: Elliptische Linse
- 3: Speiseelement
- 4: Linsenoberfläche
- 5: dielektrisches Material
- 6: Bereich in der Linse
- 7: Bereich in der Linse
- 8: Elementarzelle, 8₁ - 8₃ Elementarzellen verschiedener Größen
- 9: Hohlraum
- 10: Hohlraum
- 11: Honigwabe
- 12: Würfel
- 13: Querschnitt einer Linse
- 14: d Dicke der Würfelwand
- 15: P Permittivitätsverlauf
- 16: Su unregelmäßige Struktur
- 17: S_{R} regelmäßige Struktur
- 18: Strukturzelle

- 100: Vorgabe einer Permittivitätsverteilung
- 110: Bestimmung einer korrespondierenden Materialdichteverteilung
- 120: Bestimmung einer die Materialdichteverteilung umsetzenden Struktur
- 130: Herstellung der Struktur durch ein generatives Fertigungsverfahren
- 140: Einteilung des Führungselements in Elementarzellen

## Patentansprüche

1. Führungselement (1) für eine Antenne für ein Füllstandmessgerät, wobei das Führungselement (1) aus einem dielektrischen Material (5) besteht und zur Formung, Führung und Abstrahlung elektromagnetischer Strahlung dient,
**dadurch gekennzeichnet,**
**dass** das Führungselement (1) zur gezielten Formung der elektromagnetischen Strahlung einen über die räumliche Ausdehnung des Führungselements (1) veränderlichen Permittivitätsverlauf (P) aufweist, der durch eine räumliche Verteilung der Materialdichte des dielektrischen Materials (5) realisiert ist, wobei die Materialdichte durch einen Anteil an dielektrischem Material (5) pro Elementarzelle (8) einer vorgegebenen Größe bestimmt ist.

2. Führungselement (1) nach Anspruch 1, **dadurch gekennzeichnet, dass**
das Material (5) zumindest in einem Teil der Elementarzellen (8) in einer unregelmäßigen Struktur (S_{U}) oder in einer regelmäßigen Struktur (S_{R}) angeordnet ist.

3. Führungselement (1) nach Anspruch 1 oder 2, **dadurch gekennzeichnet, dass** der Permittivitätsverlauf (P) zumindest über einen Teil der räumlichen Ausdehnung des Führungselements (1) stetig oder unstetig ist.

4. Führungselement (1) nach Anspruch 2 oder 3, **dadurch gekennzeichnet, dass** die unregelmäßige Struktur (S_{U}) oder die regelmäßige Struktur (S_{R}) eine Voronoi-Parkettierung oder eine Delaunay-Parkettierung des Raumes der Elementarzellen (8) ist.

5. Führungselement (1) nach Anspruch 4, **dadurch gekennzeichnet, dass** die räumliche Verteilung der Materialdichte des dielektrischen Materials (5) durch Variation der Wandstärke der Zellen realisiert ist, aus denen die Voronoi-Parkettierung oder die Delaunay-Parkettierung der Elementarzellen besteht.

6. Führungselement (1) nach Anspruch 4 oder 5, **dadurch gekennzeichnet, dass** die räumliche Verteilung der Materialdichte des dielektrischen Materials (5) durch Variation der Dichte der Zellen realisiert ist, aus denen die Voronoi-Parkettierung oder die Delaunay-Parkettierung der Elementarzellen besteht bei gleichbleibender Wandstärke der Zellen.

7. Führungselement (1) nach einem der Ansprüche 2 bis 6, **dadurch gekennzeichnet, dass** die unregelmäßige Struktur (S_{U}) und die regelmäßige Struktur (S_{R}) durch benachbarte Strukturzellen (18) gebildet werden, wobei die Größe der Strukturzellen (18) veränderlich ist in Abhängigkeit von der Größe der Elementarzelle (8), in denen sich die jeweiligen Strukturzellen (18) befinden, insbesondere wobei die Strukturzellen (18) im statistischen Mittel in großen Elementarzellen (8) größer sind als die Strukturzellen (18) in kleineren Elementarzellen (8).

8. Führungselement (1) nach einem der Ansprüche 1 bis 7, **dadurch gekennzeichnet, dass** das Führungselement (1) durch ein generatives Fertigungsverfahren hergestellt ist.

9. Führungselement (1) nach einem der Ansprüche 1 bis 8, **dadurch gekennzeichnet, dass** die Größe der Elementarzelle (8) in einem Volumenbereich abhängig ist von dem Gradienten (G) des Permittivitätsverlaufs (P) in diesem Volumenbereich, insbesondere von dem maximalen Gradienten des Permittivitätsverlaufs (P) in diesem Volumenbereich.

10. Führungselement (1) nach Anspruch 9, **dadurch gekennzeichnet, dass** die Größe der Elementarzelle (8) am kleinsten für den Volumenbereich gewählt ist, der den größten Gradienten des Permittivitätsverlaufs (P) aufweist und/oder dass die Größe der Elementarzelle (8) am größten für den Volumenbereich gewählt ist, der den kleinsten Gradienten des Permittivitätsverlaufs (P) aufweist.

11. Führungselement (1) nach einem Anspruch 9 oder 10, **dadurch gekennzeichnet, dass** die Größe einer Elementarzelle (8) im statistischen Mittel über das Volumen des Führungselements (1) gemittelt dort größer ist, wo der Gradient des Permittivitätsverlaufs (P) kleiner ist und die Größe einer Elementarzelle im statistischen Mittel über das Volumen des Führungselements (1) gemittelt dort kleiner ist, wo der Gradient des Permittivitätsverlaufs (P) größer ist.

12. Verfahren zur Herstellung eines Führungselementes (1) für eine Antenne für ein Füllstandmessgerät, wobei das Führungselement (1) aus einem dielektrischen Material (5) besteht und eine zugeführte elektromagnetische Strahlung formt, weiterführt und abstrahlt,
**dadurch gekennzeichnet,**
**dass** zunächst eine Permittivitätsverteilung (P) in der räumlichen Ausdehnung des Führungselements (1) vorgegeben wird (100),
**dass** dann eine zu der vorgegebenen Permittivitätsverteilung (P) korrespondierende Materialdichteverteilung bestimmt wird (110),
**dass** dann eine Struktur bestimmt wird, die die Materialdichteverteilung umsetzt (120) und
**dass** dann die Struktur durch ein generatives Fertigungsverfahren hergestellt wird (130).

13. Verfahren nach Anspruch 12, **dadurch gekennzeichnet, dass** für die Bestimmung der die Materialdichteverteilung umsetzenden Struktur das Führungselement (1) in Elementarzellen (8) eingeteilt wird (140), wobei die Größe benachbarter Elementarzellen (8) voneinander variieren kann.

14. Verfahren nach Anspruch 13, **dadurch gekennzeichnet, dass** die Größe der Elementarzelle (8) in einem Volumenbereich abhängig von dem Gradienten des Permittivitätsverlaufs (P) in diesem Volumenbereich gewählt wird, insbesondere von dem maximalen Gradienten des Permittivitätsverlaufs (P) in diesem Volumenbereich.

15. Verfahren nach Anspruch 14, **dadurch gekennzeichnet, dass** die Größe der Elementarzelle (8) am kleinsten für den Volumenbereich gewählt wird, der den größten Gradienten des Permittivitätsverlaufs (P) aufweist und/oder dass die Größe der Elementarzelle (8) am größten für den Volumenbereich gewählt wird, der den kleinsten Gradienten des Permittivitätsverlaufs (P) aufweist.

16. Verfahren nach einem der Ansprüche 14 und 115, **dadurch gekennzeichnet, dass** die Größe einer Elementarzelle (8) im statistischen Mittel über das Volumen des Führungselements (1) gemittelt dort größer gewählt wird, wo der Gradient des Permittivitätsverlaufs (P) kleiner ist und die Größe einer Elementarzelle im statistischen Mittel über das Volumen des Führungselements (1) gemittelt dort kleiner gewählt wird, wo der Gradient des Permittivitätsverlaufs (P) größer ist.

17. Verfahren nach Anspruch 16, **dadurch gekennzeichnet, dass** die Größe der Elementarzellen (8) derart gewählt wird, dass die maximale Permittivität oder der maximale räumliche Permittivitätsgradient in eine proportionale räumliche Punktedichte übersetzt wird und die Punkte als Entwicklungspunkte für eine dreidimensionale Voronoi-Zerlegung des Volumens des Führungselementes (1) dienen.
